# EUROPEAN PATENT SPECIFICATION

(11) **EP 2 627 039 B1**
(45) Date of publication and mention of the grant of the patent: **22.06.2016**
(21) Application number: 11837425.5
(22) Date of filing: 18.03.2011
(51) Int. Cl.: H04L 12/709, H04L 12/26

(54) **METHOD AND DEVICE FOR SWITCHING AGGREGATION LINKS**
VERFAHREN UND VORRICHTUNG ZUM UMSCHALTEN VON AGGREGATIONSLINKS
PROCÉDÉ ET DISPOSITIF POUR COMMUTER DES LIENS D'AGRÉGATION

(30) Priority: 04.11.2010 CN 201010532000
(43) Date of publication of application: 14.08.2013
(73) Proprietor: ZTE Corporation, Shenzhen, Guangdong 518057 (CN)
(72) Inventor: FAN, Huihua, Shenzhen Guangdong 518057 (CN)
(74) Representative: Price, Nigel John King
(86) International application number: PCT/CN2011/071976
(87) International publication number: WO 2012/058895

(56) References cited:
- WO-A1-2010/045832
- CN-A- 101 378 359
- CN-A- 101 651 960
- US-A1- 2010 265 831
- US-B1- 7 529 180

## Description

### TECHNICAL FIELD

The disclosure relates to the field of communications, and in particular to a method and a device for switching aggregated links.

### BACKGROUND

The link aggregation is a packaging technology which combines two or more data channels into one channel; and this channel is represented as a logical link with higher bandwidth.

If each of the aggregated links follows a different physical path, the aggregated links also provide redundancy and fault tolerance. The link aggregation can be used for improving the access to the public network via an aggregated modem link or a digital line. In addition, the link aggregation also can be used for the enterprise network, so as to construct a multi-Gigabit trunk link among the Gigabit Ethernet switches.

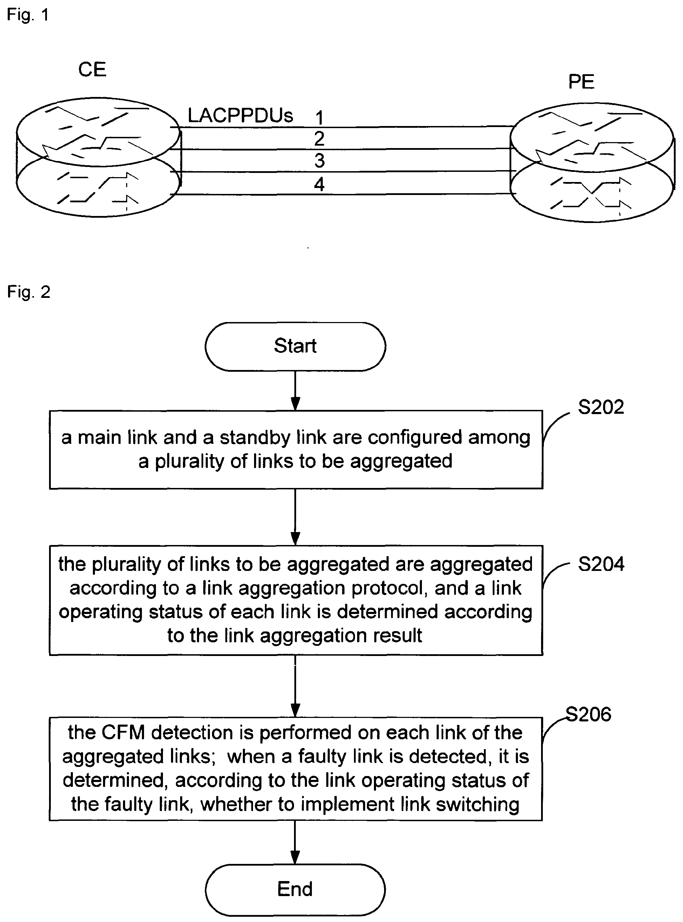

With reference to Fig. 1, the bandwidth of the logical link is increased by about (n-1) times after the link aggregation is applied, wherein n is the number of aggregated paths. If one of the n links can be normally operated, the links can be operated, so that the link reliability is improved. Additionally, the link aggregation can achieve load balancing. Two or more switches or other network devices which are connected together via the link aggregation can rationally distribute, via internal control, the data on the devices which are aggregated and connected, so as to achieve load sharing.

The Link Aggregation Control Protocol (LACP) is a protocol which is based on the IEEE802.3ad standard, and is able to achieve dynamic aggregation and disaggregation of the links. The LACP realizes information interaction via a Link Aggregation Control Protocol Data Unit (LACPDU).

After enabling the LACP protocol of a certain port, the port notifies its opposite terminal of its own system LACP protocol priority, the system Media Access Control (MAC), the LACP protocol priority of the port, the port number and the operation Key by sending a LACPDU. After receiving the LACPDU, the opposite terminal compares the information in the LACPDU and the information collected from other ports, so as to select the ports which can be aggregated, such that both parties can reach an agreement on participating in or withdrawing from a certain dynamic LACP aggregation group.

In the conventional art, when N links are aggregated, all the corresponding inactive links can be considered as the standby links, and all the inactive links can participate in the link aggregation group to carry out data forwarding and load sharing after being activated. Upon analysis, it finds that if a link based on the link aggregation protocol has a failure, the detection time is relative long. Taking the LACP protocol as an example, there are two options, namely, long timeout and short timeout, which need 90s or 3s to detect the link abnormity respectively, and then the traffic is distributed to other normal links. Thereby, it needs at least 3s to implement link switching by virtue of the LACP protocol.

In conclusion, when the aggregated link has a failure, the time used for traffic load sharing is relatively slow, which cannot meet the requirements of performing switching within 50ms of the carrier-class when service interruption occurs.

Both the documents WO2010045832A1 and CN 101651960 A relate to a method and an apparatus for protecting a bandwidth of a link aggregation group. The former is intended to detect the state of a physical link in the link aggregation group and compare the current bandwidth and the transition threshold in the case of the state of the physical link in the link aggregation group being failed so that the subsequent processing can be performed according to the comparison. The latter is intended to dynamically detect an available bandwidth of the link aggregation and perform processing based on the detection.

The document US2010/0265831A1 relates to a packet forwarding device in which a path selection table is stored. In the table, a link aggregation number that identifies an aggregation of the plurality of physical lines is set.

The documents CN 101378359 A and US 7529180B1 relate to switch of aggregated data communication links.

### SUMMARY

The disclosure is provided aiming at the problem that when the existing aggregated link has a failure, the time used for traffic load sharing is relatively slow in the conventional art, the main purpose of the disclosure therefore is to provide a method and a device for switching the aggregated links.
the method for switching aggregated links according to an embodiment of the disclosure includes:
configuring a main link and a standby link among a plurality of links to be aggregated;
performing link aggregation on the plurality of links to be aggregated according to a link aggregation protocol, and determining a link operating status of each link according to a link aggregation result;
performing Connection Failure Management (CFM) protocol detection on each link of the aggregated links, when a faulty link is detected, determining, according to a link operating status of the faulty link, whether to perform link switch.

Preferably, the configuring main link and standby link among a plurality of links to be aggregated may include: setting a local terminal status and an opposite terminal status of the main links/standby link to be consistent.

Preferably, the determining a link operating status of each link according to a link aggregation result may include:
setting the link operating status of the main link to be a working link and the link operating status of the standby link to be a protection link according to the link aggregation result which comprises at least one of the following:
   performance of the link aggregation on the main link succeeds, and performance of the link aggregation on the standby link fails;
   performance of the link aggregation both on the main link and on the standby link succeeds; and
   performance of the link aggregation both on the main link and on the standby link fails.

Preferably, the determining a link operating status of each link according to a link aggregation result may include:
when the link aggregation result is that performance of the link aggregation on the main link fails and performance of the link aggregation on the standby link succeeds, setting the link operating status of the standby link to be a working link, and setting the link operating status of the main link to be a protection link.

Preferably, the determining, according to a link operating status of the faulty link, whether to perform link switching may include:
when the faulty link is the working link and performance of the link aggregation on the protection link which is corresponding to the working link succeeds, switching data traffic transmitted by the working link to the protection link.

Preferably, the determining, according to a link operating status of the faulty link, whether to perform link switching may include:
when the faulty link is the protection link, re-executing the link aggregation protocol while not implementing link switching.

Preferably, the working link may transmit a service data and a link aggregation protocol message, the protection link may transmit an LACP message.

A device for switching aggregated links according to an embodiment of the disclosure includes:
a configuration module, arranged to configure a main link and a standby link among a plurality of links to be aggregated;
a link aggregation module, arranged to perform link aggregation on the plurality of aggregated links according to a link aggregation protocol, and to determine a link operating status of each link according to a link aggregation result;
a Connection Failure Management (CFM) detection module, arranged to implement CFM protocol detection on each link of the aggregated links; and
a link switching module, arranged to determine, according to a link operating status of a faulty link, whether to perform link switching when the CFM detection module detects the faulty link.

Preferably, the link aggregation module may include:
a link aggregation sub-module, arranged to perform link aggregation on the plurality of links to be aggregated according to the link aggregation protocol;
a first setting sub-module, arranged to set the link operating status of the main link to be a working link and to set the link operating status of the standby link to be a protection link according to the link aggregation result which comprises at least one of the following:
   performance of the link aggregation on the main link succeeds, and performance of the link aggregation on the standby link fails;
   performance of the link aggregation both on the main link and on the standby link succeeds; and
   performance of the link aggregation both on the main link and on the standby link fails;
   a second setting sub-module, arranged to set the link operating status of the standby link to be a working link and to set the link operating status of the main link to be a protection link, when the link aggregation result is that performance of the link aggregation on the main link fails and performance of the link aggregation on the standby link succeeds.

Preferably, the link switching module may be further arranged to switch data traffic transmitted by a working link to a protection link when the faulty link is the working link, and performance of the link aggregation on the protection link which is corresponding to the working link succeeds.

Compared with the conventional art, according to the technical solution of the disclosure, when an aggregated link has a failure, link switching can be performed fast on the aggregated links by presetting the link main/standby status of the aggregated links and by the fast detection with the CFM, so that the link reliability can be improved, and the carrier-class time switching requirements can be satisfied.

### BRIEF DESCRIPTION OF THE DRAWINGS

The drawings described herein are used for further understanding the disclosure, and forming a part of the application, and the exemplary embodiments of the disclosure and the descriptions thereof are used for explaining the disclosure, not intend to limit the disclosure. In the drawings:
Fig. 1 shows a diagram of two switches participating in the link aggregation in the conventional art;
Fig. 2 shows a flowchart of a method for switching the aggregated links according to an embodiment of the disclosure;
Fig. 3 shows a flowchart of a preferred processing scheme of a method for switching the aggregated links according to an embodiment of the disclosure;
Fig. 4 shows a 1:1 main/standby protection diagram of the link aggregation according to an embodiment of the disclosure;
Fig. 5 shows a block diagram of a device for switching the aggregated links according to an embodiment of the disclosure;
Fig. 6 shows a block diagram of a preferred structure of a device for switching the aggregated links according to an embodiment of the disclosure.

### DETAILED DESCRIPTION

The main idea of the disclosure is to preset the main/standby status of the member links to be aggregated, to dynamically detect the aggregation status during the link aggregation process, to fast detect the failure of the working link via the CFM, and to make a decision and implement link switching when the aggregated link has a failure.

In order to make the purposes, the technical solutions and the advantages of the disclosure clearer, the disclosure is further described below in details with reference to the drawings and embodiments.

A method for switching the aggregated links is provided according to the embodiment of the disclosure.

Fig. 2 shows a flowchart of a method for switching the aggregated links according to an embodiment of the disclosure, as shown in Fig. 1, the method mainly includes Steps S202-S206.

Step S202, a main link and a standby link are configured among a plurality of links to be aggregated,
wherein the local terminal status and the opposite terminal status of the main links/standby link are set to be consistent.

Step S204, the plurality of links to be aggregated are aggregated according to a link aggregation protocol, and a link operating status of each link is determined according to the link aggregation result.

Specifically, the link operating status refers to the working link and the protection link.

The link operating status of the main link is set to be a working link, and the link operating status of the standby link is set to be a protection link, if at least one of the following conditions exists after implementing the link aggregation: (1) performance of the link aggregation on the main link succeeds, and performance of the link aggregation on the standby link fails; (2) performance of the link aggregation both on the main link and on the standby link succeeds; and (3) performance of the link aggregation both on the main link and on the standby link fails.

When link aggregation is performed, if performance of the link aggregation on the main link fails, and performance of the link aggregation on the standby link succeeds, the link operating status of the standby link is set to be a working link, and the link operating status of the main link is set to be a protection link.

Generally, the working link participates in forwarding the data; the protection link does not participate in forwarding the data, but only participates in forwarding the message which is in the link aggregation protocol control plane.

Step S206, the CFM detection is performed on each link of the aggregated links; when a faulty link is detected, it is determined, according to the link operating status of the faulty link, whether to implement link switching.

If the faulty link is the working link, it is continued to determine whether performance of the link aggregation on the protection link succeeds, if so, the data traffic is switched to the protection link; otherwise, the link switching is not implemented, and the link aggregation protocol is re-executed. If the faulty link is the protection link, the link switching is not implemented, and the link aggregation protocol is re-executed.

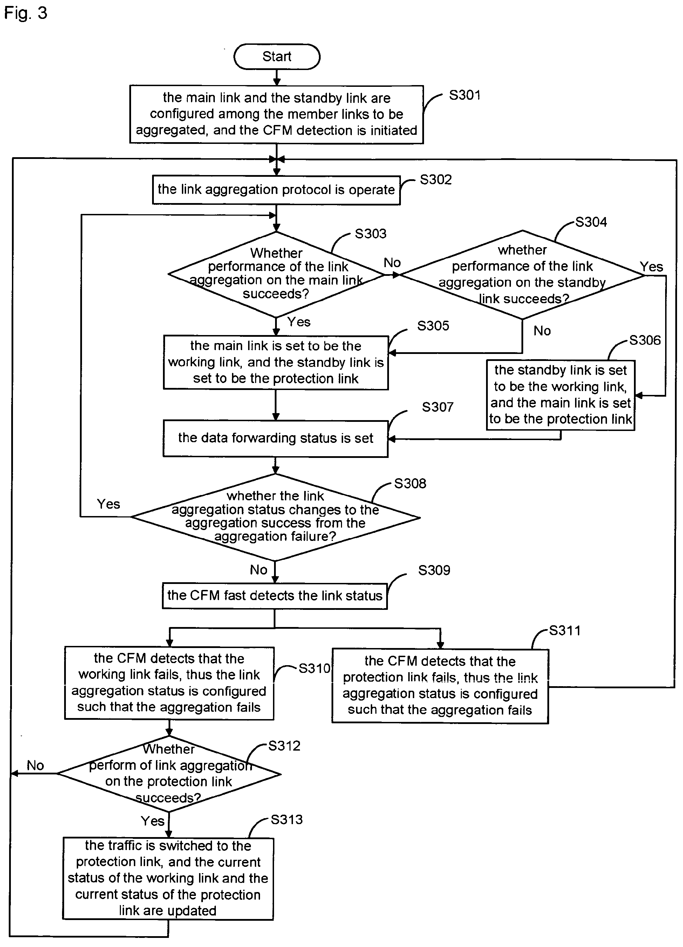

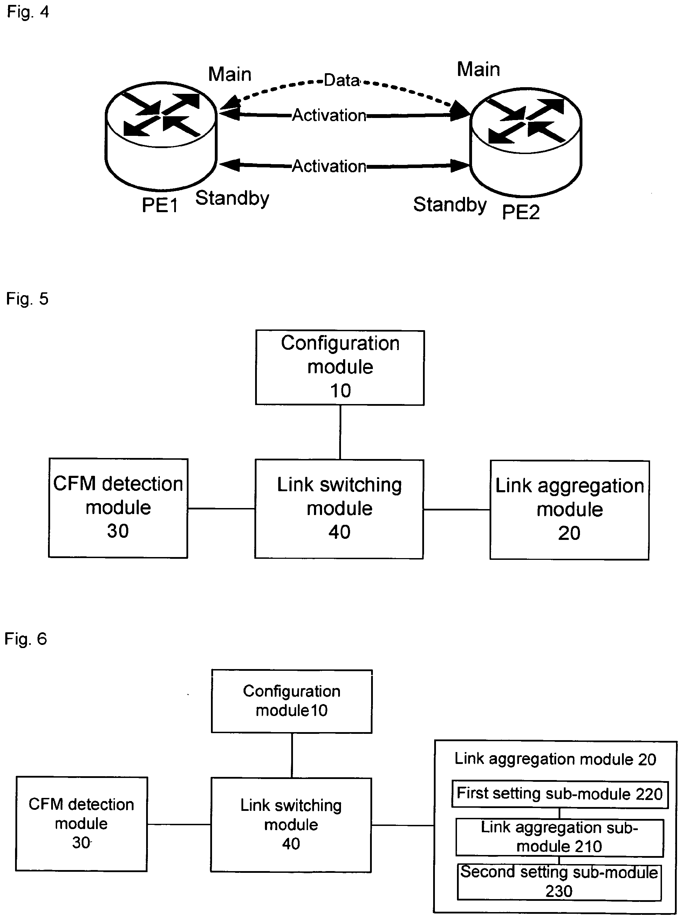

The above processing details are described below with reference to Fig. 3 and Fig. 4. Fig. 3 shows a flowchart of a preferred processing scheme of a method for switching the aggregated links according to an embodiment of the disclosure. Fig. 4 shows a 1:1 main/standby protection diagram of the link aggregation according to an embodiment of the disclosure, wherein the dotted line represents transmission of the data flow, the solid line represents the active or inactive status of the aggregated link. As shown in Fig. 3, the method can include the following steps.
Step S301, the main link and the standby link are configured among the member links to be aggregated, wherein the local terminal and the opposite terminal of a link are required to be consistent during the configuration. For example, the parameters, such as the rate, duplex, basic configuration and management Key, of the local terminal and the opposite terminal of the main link/standby link are configured to be consistent. Meanwhile, it is configured to implement the CFM Continuity Check (CC).
Step S302, the link aggregation protocol is operated, and the aggregation status of each link is determined. For example, link aggregation is performed on the plurality of links to be aggregated according to the LACP protocol. Certainly, link aggregation may be implemented according to other link aggregation protocols. LACP protocol is only an example, without limiting the application range of the disclosure thereby.
Step S303, it is determined whether performance of the link aggregation on the configured main link succeeds; if the link aggregation is successful, Step S305 is implemented; if not, Step S304 is implemented.
Step S304, it is determined whether performance of the link aggregation on the standby link succeeds, if not, Step S305 is implemented; if performance of the link aggregation on the main link fails, and performance of the link aggregation on the standby link succeeds, Step S306 is implemented.
Step S305, the main link is set to be the working link, the standby link is set to be the protection link, and then the Step S307 is implemented.
Step S306, the standby link is set to be the working link, and the main link is set to be the protection link.
Step S307, the data forwarding status is set such that the working link participates in forwarding the data and the protection link does not participate in forwarding the data. Both the working link and the protection link can receive and send the link aggregation protocol message.
Step S308, it is determined whether the link aggregation status changes to the aggregation success from the aggregation failure; if yes, back to Step S303, and thus, when performance of the link aggregation both on the main link and on the standby link succeeds, the working link can be switched back to the main link. Otherwise, Step S309 is implemented.
   It should be noted that, the link aggregation status is not set when firstly implementing the link aggregation, so this step is not neccessary to be implemented, and Step S309 is directly implemented.
Step S309, the CFM CC is implemented, and the continuity loss failure can be detected within 10ms via the CFM CC.
Step S310, when the CFM detects the failure of the working link occurs, the current status of the working link is set to be aggregation failure, and Step S312 is implemented to continuously perform determination.
Step S311, when the CFM detects the failure of the protection link occurs, the current status of the protection link is set to be aggregation failure, and Step S302 is implemented to perform dynamic loop detection.
Step S312, it is determined whether the protection link is in the successful aggregation status, if yes, Step S313 is implemented, otherwise, back to Step S302 to perform dynamic loop detection.
Step S313, the working link and the protection link are switched, the data traffic is switched to the protection link, and the protection link is taken as a new working link. In addition, the status of the current working link and the status of the protection link are updated. And then, Step S302 is executed to implement dynamic loop detection.

The flow shown in Fig. 3 is a processing flow of the 1:1 main/standby links, which can be generally used. The processing flow of the M:N (M, N>1) main/standby links is similar, and the main difference is that:
The M main links and the N standby links are considered as a main group and a standby group, namely, the 1:1 main/standby group protection. The minimum numbers P (P<=M) and Q (Q<=N) of the active links of the main link group and the standby link group need to be configured. M=N and P=Q is generally configured. When the number of the active links in the main/standby link groups is greater than or equal to the minimum number of the active links, the aggregation of the aggregation groups is considered to be successful.

In particular, when the sub-links in the link group change to the aggregation success from the aggregation failure, the aggregation success status and the aggregation failure status of the main/standby aggregation groups need to be determined based on whether the number of active links of the link groups is greater than or equal to the minimum number of the active links. When the sub-link failure is detected, the aggregation success status and the aggregation failure status of the main/standby aggregation groups need to be determined based on whether the number of active links of the link groups is greater than or equal to the minimum number of the active links. And then, switching is implemented according to the status of the main link aggregation group and the status of the standby link aggregation group, and the switching mode refers to the processing flow of the 1:1 main/standby links, which is not repeated any more.

### Device embodiment

A device for switching the aggregated links is also provided according to an embodiment of the disclosure.

Fig. 5 shows a block diagram of a device for switching the aggregated links according to an embodiment of the disclosure, and Fig. 6 shows a block diagram of a preferred structure of a device for switching the aggregated links according to an embodiment of the disclosure.

As shown in Fig. 5, the device includes: a configuration module 10, a link aggregation module 20, a CFM detection module 30 and a link switching module 40.

The configuration module 10 is arranged to configure a main link and a standby link among a plurality of links to be aggregated.

The link aggregation module 20 is arranged to perform link aggregation on the plurality of aggregated links according to a link aggregation protocol, and to determine a link operating status of each link according to a link aggregation result.

As shown in Fig. 6, the link aggregation module 20 may further include: a link aggregation sub-module 210, arranged to perform link aggregation on the plurality of links to be aggregated according to the link aggregation protocol; a first setting sub-module 220, which is connected with the link aggregation sub-module 210 and is arranged to set the link operating status of the main link to be a working link and to set the link operating status of the standby link to be a protection link according to the link aggregation result from the link aggregation sub-module 210, wherein the link aggregation result includes at least one of the following: performance of the link aggregation on the main link succeeds, and performance of the link aggregation on the standby link fails; performance of the link aggregation both on the main link and on the standby link succeeds; and performance of the link aggregation both on the main link and on the standby link fails; and a second setting sub-module 230, which is connected with the link aggregation sub-module 210 and is arranged to set the link operating status of the standby link to be a working link and to set the link operating status of the main link to be a protection link, when the link aggregation result from the link aggregation sub-module 210 is that performance of the link aggregation on the main link fails and performance of the link aggregation on the standby link succeeds.

The CFM detection module 30 is arranged to implement CFM protocol detection on each link of the aggregated links.

The link switching module 40 is connected with the configuration module 10, the link aggregation module 20 and the CFM detection module 30, and is arranged to determine, according to a link operating status of a faulty link, whether to perform link switching when the CFM detection module 30 detects the faulty link. The link switching module 40 may be further arranged to switch data traffic transmitted by a working link to a protection link, when the faulty link is the working link and performance of the link aggregation on the protection link which is corresponding to the working link succeeds.

In conclusion, according to the technical solution of the disclosure, the main/standby status of the aggregation member links is preset, the aggregation status is dynamically detected during the link aggregation process, and the failure of the working link can be fast detected via the CFM, and thus, the links can be fast switched when a aggregated link has a failure, so as to improve the link reliability, and to meet the carrier-grade (50ms) switching requirements.

## Claims

1. A method for switching aggregated links, **characterized in that**, the method comprises:
configuring (S202) a main link and a standby link among a plurality of links to be aggregated;
performing (S204) link aggregation on the plurality of links to be aggregated according to a link aggregation protocol, and determining a link operating status of each link according to a link aggregation result;
performing (S206) Connection Failure Management (CFM) protocol detection on each link of the aggregated links, when a faulty link is detected, determining, according to a link operating status of the faulty link, whether to perform link switch.

2. The method according to claim 1, wherein the configuring (S202) main link and standby link among a plurality of links to be aggregated comprises:
setting a local terminal status and an opposite terminal status of the main links/standby link to be consistent.

3. The method according to claim 1, wherein the determining a link operating status of each link according to a link aggregation result comprises:
setting the link operating status of the main link to be a working link and the link operating status of the standby link to be a protection link according to the link aggregation result which comprises at least one of the following:
performance of the link aggregation on the main link succeeds, and performance of the link aggregation on the standby link fails;
performance of the link aggregation both on the main link and on the standby link succeeds; and
performance of the link aggregation both on the main link and on the standby link fails.

4. The method according to claim 1, wherein the determining a link operating status of each link according to a link aggregation result comprises:
when the link aggregation result is that performance of the link aggregation on the main link fails and performance of the link aggregation on the standby link succeeds, setting (S306) the link operating status of the standby link to be a working link, and setting (S305) the link operating status of the main link to be a protection link.

5. The method according to claim 3 or 4, wherein the determining, according to a link operating status of the faulty link, whether to perform link switching comprises:
when the faulty link is the working link and performance of the link aggregation on the protection link which is corresponding to the working link succeeds, switching (S313) data traffic transmitted by the working link to the protection link.

6. The method according to claim 3 or 4, wherein the determining, according to a link operating status of the faulty link, whether to perform link switching comprises:
when the faulty link is the protection link, re-executing (S302) the link aggregation protocol while not implementing link switching.

7. The method according to claim 3 or 4, wherein the working link transmits a service data and a link aggregation protocol message, the protection link transmits a Link Aggregation Control Protocol (LACP) message.

8. A device for switching aggregated links, **characterized in that**, the device comprises:
a configuration module (10), arranged to configure a main link and a standby link among a plurality of links to be aggregated;
a link aggregation module (20), arranged to perform link aggregation on the plurality of aggregated links according to a link aggregation protocol, and to determine a link operating status of each link according to a link aggregation result;
a Connection Failure Management (CFM) detection module (30), arranged to implement CFM protocol detection on each link of the aggregated links; and
a link switching module (40), arranged to determine, according to a link operating status of a faulty link, whether to perform link switching when the CFM detection module (30) detects the faulty link.

9. The device according to claim 8, wherein the link aggregation module (20) comprises:
a link aggregation sub-module (210), arranged to perform link aggregation on the plurality of links to be aggregated according to the link aggregation protocol;
a first setting sub-module (220), arranged to set the link operating status of the main link to be a working link and to set the link operating status of the standby link to be a protection link according to the link aggregation result which comprises at least one of the following:
performance of the link aggregation on the main link succeeds, and performance of the link aggregation on the standby link fails;
performance of the link aggregation both on the main link and on the standby link succeeds; and
performance of the link aggregation both on the main link and on the standby link fails; and
a second setting sub-module (230), arranged to set the link operating status of the standby link to be a working link and to set the link operating status of the main link to be a protection link, when the link aggregation result is that performance of the link aggregation on the main link fails and performance of the link aggregation on the standby link succeeds.

10. The device according to claim 8, wherein, the link switching module (40) is further arranged to switch data traffic transmitted by a working link to a protection link, when the faulty link is the working link and performance of the link aggregation on the protection link which is corresponding to the working link succeeds.

## Patentansprüche

1. Verfahren zum Schalten gebündelter Verbindungen, **dadurch gekennzeichnet, dass** das Verfahren umfasst:
Konfigurieren (S202) einer Hauptverbindung und einer Standby-Verbindung bei einer Vielzahl von zu bündelnden Verbindungen;
Durchführen (S204) der Verbindungsbündelung bei der Vielzahl von zu bündelnden Verbindungen gemäß einem Verbindungsbündelungs-Protokoll und Bestimmen eines Verbindungsbetriebszustands von jeder Verbindung gemäß einem Verbindungsbündelungsresultat;
Durchführen (S206) einer Erfassung eines Protokolls Verbindungsausfallmanagement (CFM) bei jeder Verbindung der gebündelten Verbindungen, wenn eine fehlerhafte Verbindung festgestellt wird, Bestimmen gemäß einem Verbindungsbetriebszustand der fehlerhaften Verbindung, ob eine Verbindungsumschaltung ausgeführt werden soll.

2. Verfahren nach Anspruch 1, wobei das Konfigurieren (S202) von Hauptverbindung und Standby-Verbindung unter einer Vielzahl von zu bündelnden Verbindungen umfasst:
Einstellen eines lokalen Endpunktzustands und eines gegenüberliegenden Endpunktzustands der Hauptverbindungen/Standby-Verbindung, dass sie konsistent sind.

3. Verfahren nach Anspruch 1, wobei das Bestimmen eines Verbindungsbetriebszustands von jeder Verbindung gemäß einem Verbindungsbündelungsresultat umfasst:
Einstellen des Verbindungsbetriebszustands der Hauptverbindung, dass sie eine funktionierende Verbindung ist, und des Verbindungsbetriebszustands der Standby-Verbindung, dass sie eine Schutzverbindung gemäß dem Verbindungsbündelungsresultat ist, was mindestens eines des Folgenden umfasst:
Durchführung der Verbindungsbündelung bei der Hauptverbindung ist erfolgreich, und Durchführung der Verbindungsbündelung bei der Standby-Verbindung schlägt fehl;
Durchführung der Verbindungsbündelung bei der Hauptverbindung und der Standby-Verbindung ist erfolgreich; und
Durchführung der Verbindungsbündelung bei der Hauptverbindung und bei der Standby-Verbindung schlägt fehl.

4. Verfahren nach Anspruch 1, wobei das Bestimmen eines Verbindungsbetriebszustands von jeder Verbindung gemäß einem Verbindungsbündelungsresultat umfasst:
wenn das Verbindungsbündelungsresultat ist, dass die Durchführung der Verbindungsbündelung bei der Hauptverbindung fehlschlägt und die Durchführung der Verbindungsbündelung bei der Standby-Verbindung erfolgreich ist, Einstellen (S306) des Verbindungsbetriebszustands der Standby-Verbindung, dass sie eine funktionierende Verbindung ist, und Einstellen (S305) des Verbindungsbetriebszustands, der Hauptverbindung, dass sie eine Schutzverbindung ist.

5. Verfahren nach Anspruch 3 oder 4, wobei das Bestimmen gemäß einem Verbindungsbetriebszustand der fehlerhaften Verbindung, ob eine Verbindungsumschaltung ausgeführt werden soll, umfasst:
wenn die fehlerhafte Verbindung die funktionierende Verbindung ist und die Durchführung der Verbindungsbündelung bei der Schutzverbindung, die er funktionierenden Verbindung entspricht, erfolgreich ist, Umschalten (S313) des von der funktionierenden Verbindung übertragenen Datenverkehrs auf die Schutzverbindung.

6. Verfahren nach Anspruch 3 oder 4, wobei das Bestimmen gemäß einem Verbindungsbetriebszustand der fehlerhaften Verbindung, ob eine Verbindungsumschaltung ausgeführt werden soll, umfasst:
wenn die fehlerhafte Verbindung die Schutzverbindung ist, erneutes Ausführen (S302) des Verbindungsbündelungsprotokolls mit keinem Implementieren der Verbindungsumschaltung.

7. Verfahren nach Anspruch 3 oder 4, wobei die funktionierende Verbindung eine Servicedaten- und eine Verbindungsbündelungsprotokoll-Nachricht überträgt, und die Schutzverbindung eine Nachricht Verbindungsbündelung-Kontrollprotokoll (LACP) überträgt.

8. Gerät zum Umschalten gebündelter Verbindungen, **dadurch gekennzeichnet, dass** das Gerät umfasst:
ein Konfigurationsmodul (10), angeordnet zum Konfigurieren einer Hauptverbindung und einer Standby-Verbindung unter einer Vielzahl von zu bündelnden Verbindungen;
ein Verbindungsbündelungsmodul (20), angeordnet zum Ausführen der Verbindungsbündelung bei der Vielzahl von gebündelten Verbindungen gemäß einem Verbindungsbündelungsprotokoll, und zum Bestimmen eines Verbindungsbetriebszustands von jeder Verbindung gemäß einem Verbindungsbündelungsresultat;
ein Erfassungsmodul des Verbindungsausfallmanagements (CFM) (30), angeordnet zum Implementieren der CFM-Protokollerfassung bei jeder Verbindung der gebündelten Verbindungen; und
ein Verbindungsumschaltmodul (40), angeordnet zum Bestimmen gemäß einem Verbindungsbetriebszustand einer fehlerhaften Verbindung, ob eine Verbindungsumschaltung ausgeführt werden soll, wenn das CFM-Erfassungsmodul (30) die fehlerhafte Verbindung erkennt.

9. Gerät nach Anspruch 8, wobei das Verbindungsbündelungsmodul (20) umfasst:
ein Verbindungsbündelungsuntermodul (210), angeordnet zum Ausführen der Verbindungsbündelung bei der Vielzahl von zu bündelnden Verbindungen gemäß dem Verbindungsbündelungsprotokoll;
ein erstes Einstellungsuntermodul (220), angeordnet zum Einstellen des Verbindungsbetriebszustands der Hauptverbindung, dass sie eine funktionierende Verbindung ist, und zum Einstellen des Verbindungsbetriebszustands der Standby-Verbindung, dass sie eine Schutzverbindung gemäß dem Verbindungsbündelungsresultat ist, was mindestens eines des Folgenden umfasst:
Durchführung der Verbindungsbündelung bei der Hauptverbindung ist erfolgreich, und Durchführung der Verbindungsbündelung bei der Standby-Verbindung schlägt fehl;
Durchführung der Verbindungsbündelung bei der Hauptverbindung und der Standby-Verbindung ist erfolgreich; und
Durchführung der Verbindungsbündelung bei der Hauptverbindung und bei der Standby-Verbindung schlägt fehl; und
ein zweites Einstellungsuntermodul (230), angeordnet zum Einstellen des Verbindungsbetriebszustands der Standby-Verbindung, dass sie eine funktionierende Verbindung ist, und zum Einstellen des Verbindungsbetriebszustands der Hauptverbindung, dass sie eine Schutzverbindung ist, wenn das Verbindungsbündelungsresultat derart ist, dass die Durchführung der Verbindungsbündelung bei der Hauptverbindung fehlschlägt und die Durchführung der Verbindungsbündelung bei der Standby-Verbindung erfolgreich ist.

10. Gerät nach Anspruch 8, wobei das Verbindungsumschaltmodul (40) ferner angeordnet ist, den übertragenen Datenverkehr von einer funktionierenden Verbindung auf eine Schutzverbindung umzuschalten, wenn die fehlerhafte Verbindung die funktionierende Verbindung ist, und die Durchführung der Verbindungsbündelung bei der Schutzverbindung, die der funktionierenden Verbindung entspricht, erfolgreich ist.

## Revendications

1. Procédé de commutation de liaisons agrégées, **caractérisé en ce que** le procédé comprend les étapes consistant à :
configurer (S202) une liaison principale et une liaison de secours parmi une pluralité de liaisons à agréger ;
exécuter (S204) l'agrégation de liaisons sur la pluralité des liaisons à agréger selon un protocole d'agrégation de liaisons, et déterminer un statut de fonctionnement de liaison pour chaque liaison selon un résultat de l'agrégation de liaisons ;
exécuter (S206) une détection de protocole de gestion de défaillances de connexion (CFM) sur chaque liaison des liaisons agrégées, quand une liaison défectueuse est détectée, déterminer, selon un statut de fonctionnement de liaison de la liaison défectueuse, s'il est souhaitable de procéder à une commutation des liaisons.

2. Procédé selon la revendication 1, dans lequel la configuration (S202) de la liaison principale et de la liaison de secours parmi une pluralité de liaisons à agréger comprend :
le réglage d'un statut de terminal local et d'un statut de terminal opposé de la liaison principale/liaison de secours pour qu'ils soient cohérents.

3. Procédé selon la revendication 1, dans lequel la détermination d'un statut de fonctionnement de liaison de chaque liaison selon un résultat d'agrégation de liaisons comprend :
le réglage du statut de fonctionnement de liaison de la liaison principale pour qu'elle soit une liaison fonctionnelle et le statut de fonctionnement de liaison de la liaison de secours pour qu'elle soit une liaison de protection selon le résultat d'agrégation de liaisons qui comprend au moins une des étapes suivantes :
l'exécution de l'agrégation de liaisons sur la liaison principale réussit, et l'exécution de l'agrégation de liaisons sur la liaison de secours échoue ;
l'exécution de l'agrégation de liaisons réussit à la fois sur la liaison principale et sur la liaison de secours ; et
l'exécution de l'agrégation de liaisons échoue à la fois sur la liaison principale et sur la liaison de secours ;

4. Procédé selon la revendication 1, dans lequel la détermination d'un statut de fonctionnement des liaisons pour chaque liaison selon un résultat d'agrégation de liaisons comprend l'étape suivante :
quand le résultat d'agrégation de liaisons indique que l'exécution de l'agrégation de liaisons sur la liaison principale échoue et l'exécution de l'agrégation de liaisons sur la liaison de secours réussit, le réglage (S306) du statut de fonctionnement de liaison de la liaison de secours pour qu'elle soit une liaison fonctionnelle, et le réglage (S305) du statut de fonctionnement de liaison de la liaison principale pour qu'elle soit une liaison de protection.

5. Procédé selon la revendication 3 ou 4, dans lequel la détermination, selon un statut de fonctionnement de liaison de la liaison défectueuse, s'il est souhaitable de procéder à une commutation de liaisons, comprend :
quand la liaison défectueuse est la liaison fonctionnelle et l'exécution de l'agrégation de liaisons sur la liaison de protection qui correspond à la liaison fonctionnelle réussit, la commutation (S313) du trafic des données transmises par la liaison fonctionnelle à la liaison de protection.

6. Procédé selon la revendication 3 ou 4, dans lequel la détermination, selon un statut de fonctionnement de liaison de la liaison défectueuse, s'il est souhaitable de procéder à une commutation de liaisons comprend l'étape consistant à :
quand la liaison défectueuse est la liaison de protection, exécuter à nouveau (S302) le protocole d'agrégation de liaisons en ne mettant pas en oeuvre la commutation de liaisons.

7. Procédé selon la revendication 3 ou 4, dans lequel la liaison fonctionnelle transmet des données de service et un message de protocole d'agrégation de liaisons, la liaison de protection transmet un message de protocole de contrôle d'agrégation de liaisons (LACP).

8. Dispositif de commutation de liaisons agrégées, **caractérisé en ce que** le dispositif comprend :
un module de configuration (10), agencé pour configurer une liaison principale et une liaison de secours parmi une pluralité de liaisons à agréger ;
un module d'agrégation de liaisons (20), agencé pour exécuter une agrégation de liaisons sur la pluralité de liaisons agrégées selon un protocole d'agrégation de liaisons, et déterminer un statut de fonctionnement de liaison pour chaque liaison selon un résultat d'agrégation de liaisons ;
un module de détection (30) de gestion de défaillances de connexion (CFM), agencé pour mettre en place une détection de protocole CFM sur chaque liaison des liaisons agrégées ; et
un module de commutation de liaisons (40), agencé pour déterminer, selon un statut de fonctionnement de liaison de la liaison défectueuse, s'il est souhaitable de procéder à une commutation de liaisons quand le module de détection CFM (30) détecte la liaison défectueuse.

9. Dispositif selon la revendication 8, dans lequel le module d'agrégation des liaisons (20) comprend :
un sous-module d'agrégation de liaisons (210), agencé pour exécuter une agrégation de liaisons sur la pluralité de liaisons à agréger selon le protocole d'agrégation de liaisons ;
un premier sous-module de réglage (220), agencé pour régler le statut de fonctionnement de liaison de la liaison principale pour qu'elle soit une liaison fonctionnelle et régler le statut de fonctionnement de liaison de la liaison de secours pour qu'elle soit une liaison de protection selon le résultat d'agrégation de liaisons qui comprend au moins une des étapes suivantes :
l'exécution de l'agrégation de liaisons sur la liaison principale réussit, et l'exécution de l'agrégation de liaisons sur la liaison de secours échoue ;
l'exécution de l'agrégation de liaisons réussit à la fois sur la liaison principale et sur la liaison de secours ; et
l'exécution de l'agrégation de liaisons échoue à la fois sur la liaison principale et sur la liaison de secours ; et
un deuxième sous-module de réglage (230), agencé pour régler le statut de fonctionnement de liaison de la liaison de secours pour qu'elle soit une liaison fonctionnelle et régler le statut de fonctionnement de liaison de la liaison principale pour qu'elle soit une liaison de protection, quand le résultat d'agrégation de liaisons indique que l'exécution de l'agrégation de liaisons sur la liaison principale échoue et l'exécution de l'agrégation de liaisons sur la liaison de secours réussit.

10. Dispositif selon la revendication 8, dans lequel le module de commutation de liaisons (40) est également disposé pour commuter la circulation des données transmises par une liaison fonctionnelle à une liaison de protection, quand la liaison défectueuse est la liaison fonctionnelle et l'exécution de l'agrégation de liaisons sur la liaison de protection qui correspond à la liaison fonctionnelle réussit.
